(19) Europäisches Patentamt
European Patent Office
Office européen des brevets

(11) **EP 3 663 612 B1**

(12) **FASCICULE DE BREVET EUROPEEN**

(45) Date de publication et mention
de la délivrance du brevet:
**01.06.2022 Bulletin 2022/22**

(21) Numéro de dépôt: **18210539.5**

(22) Date de dépôt: **05.12.2018**

(51) Classification Internationale des Brevets (IPC):
***F16H 25/22*** *(2006.01)* *F16H 25/20* *(2006.01)*

(52) Classification Coopérative des Brevets (CPC):
**F16H 25/2252; F16H 25/205;** F16H 2025/2081;
F16H 2025/2257

(54) **MÉCANISME D'ACTIONNEMENT AVEC UN MÉCANISME DE VIS À ROULEAUX SATELLITES**

BETÄTIGUNGSMECHANISMUS MIT EINEM SATELLITEN-GEWINDEROLLENMECHANISMUS

ACTUATION MECHANISM WITH A SATELLITE ROLLER SCREW MECHANISM

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(43) Date de publication de la demande:
**10.06.2020 Bulletin 2020/24**

(73) Titulaire: **Ewellix AB**
**433 21 Partille, Göteborg (SE)**

(72) Inventeur: **Groll, Arnaud**
**73360 Saint Franc (FR)**

(74) Mandataire: **Heyerhoff Geiger & Partner
Patentanwälte PartGmbB
Heiligenbreite 52
88662 Überlingen (DE)**

(56) Documents cités:
**WO-A1-2017/025118 JP-A- 2007 100 761
US-A- 3 214 991**

**Description**

Domaine technique de l'invention

La présente invention concerne le domaine des mécanisme d'actionnement comprenant un moyen d'entraînement en rotation et un mécanisme de vis à rouleaux permettant de transformer un mouvement de rotation en un mouvement de translation linéaire, et inversement, et plus particulièrement les mécanismes de vis à rouleaux satellites.

Etat de la technique antérieur

Un tel mécanisme de vis à rouleaux est pourvu d'une vis comprenant un filetage extérieur, d'un écrou disposé autour de la vis et comprenant un filetage intérieur, et d'une pluralité de rouleaux longitudinaux en prise avec les filetages extérieur et intérieur de la vis et de l'écrou, respectivement. Par rapport à un mécanisme de vis à billes, un mécanisme de vis à rouleaux a pour avantage principal de présenter des capacités de charge admissibles plus élevées.

Un premier type de mécanisme de vis à rouleaux comprend des rouleaux présentant un filetage extérieur en prise avec les filetages extérieur et intérieur de la vis et de l'écrou, respectivement. Les filetages des rouleaux et le filetage de l'écrou présentent des angles d'hélices identiques entre eux et différents de celui du filetage de la vis de sorte que, lorsque la vis tourne par rapport à l'écrou, les rouleaux tournent sur eux-mêmes et roulent autour de la vis sans se déplacer axialement à l'intérieur de l'écrou. Les rouleaux sont guidés en rotation parallèlement à l'axe de la vis par des dentures rapportées sur l'écrou et en prise avec des dentures pourvues auxdits rouleaux. Un tel mécanisme est appelé vis à rouleaux satellites.

Il est connu également un deuxième type de mécanisme de vis à rouleaux présentant un principe de fonctionnement analogue mais se différenciant par une disposition inversée. Les angles d'hélice des filetages des rouleaux, de la vis, et de l'écrou, sont choisis de sorte que, lorsque la vis tourne par rapport à l'écrou, les rouleaux tournent sur eux-mêmes autour de la vis et se déplacent axialement dans l'écrou. Les rouleaux sont guidés en rotation parallèlement à l'axe de la vis par des dentures ménagées sur celle-ci et coopérant avec des dentures desdits rouleaux. Un tel mécanisme est appelé vis à rouleaux satellites inverse.

Il est souhaitable dans certaines applications d'avoir un élément dont le mouvement de sortie combine à la fois une translation linéaire et une rotation. La solution actuelle à une telle problématique est de prévoir un assemblage incluant deux mécanismes à vis associés, un premier étant dédié au mouvement de translation linéaire, et un second permettant le mouvement de rotation. Toutefois, cela présente l'inconvénient d'un coût élevé et d'un encombrement axial et/ou radial important.

Une autre limitation structurelle des mécanismes de vis à rouleaux satellites est de ne pas permettre des pas de filetage suffisamment petits pour atteindre une haute précision de déplacement linéaire, en particulier à faible vitesse et sous charge importante, et également de ne pas permettre des pas de filetage suffisamment grands pour atteindre une haute vitesse de déplacement linéaire, en particulier à faible charge. US 3 214 991 A décrit un dispositif de transformation d'un mouvement de rotation en mouvement de translation de très faible avance par tour comprenant un mécanisme de vis à rouleaux.

Résumé de l'invention

La présente invention vise à remédier à ces inconvénients.

Plus particulièrement, la présente invention vise à prévoir un mécanisme d'actionnement avec un mécanisme de vis à rouleaux dans lequel, pour une vitesse et une charge données, la précision de déplacement linéaire est optimisée et, pour une charge données, la vitesse de déplacement linéaire est optimisée, tout en étant compact, de faible coût, en permettant un mouvement de sortie combinant un déplacement linéaire et une rotation.

L'invention concerne un mécanisme d'actionnement comprenant un moyen d'entraînement en rotation principal et un mécanisme de vis à rouleaux couplé audit moyen d'entraînement.

Le mécanisme de vis à rouleaux est pourvu d'une vis comprenant un filetage extérieur, d'un écrou disposé autour et co-axialement à ladite vis, l'écrou comprenant un filetage intérieur, et d'une pluralité de rouleaux interposés entre la vis et l'écrou et comprenant chacun un filetage extérieur en prise avec les filetages extérieur et intérieur de ladite vis et dudit écrou, respectivement. L'un parmi la vis et l'écrou est couplé au moyen d'entraînement en rotation principal, l'autre étant mobile en translation et en rotation par rapport aux rouleaux.

Le mécanisme de vis à rouleaux comprend également un guide annulaire de maintien circonférentiel et axial des rouleaux. Le guide est monté radialement entre la vis et l'écrou. Le guide comprend un premier talon annulaire, un second talon annulaire, et une pluralité de portions allongées reliant axialement les premier et second talons de manière à définir une pluralité d'évidements séparés les uns des autres dans le sens circonférentiel par lesdites portions allongées, chacun desdits évidements recevant un rouleau.

Selon l'invention, le guide annulaire comprend un manchon cylindrique s'étendant axialement depuis un des talons annulaires vers l'extérieur au-delà de l'écrou, la vis s'étendant dans un alésage dudit manchon. Ledit manchon est couplé à un moyen d'entraînement en rotation secondaire.

Selon l'invention, le moyen d'entraînement principal comprend un premier moteur et le moyen d'entraînement secondaire comprend un second moteur distinct du premier moteur.

Selon d'autres caractéristiques avantageuses mais non obligatoires de l'invention, prises isolément ou en combinaison :

- L'écrou est couplé au moyen d'entraînement en rotation principal, et le mécanisme de vis à rouleaux est un mécanisme de vis à rouleaux satellites.
- La vis est couplée au moyen d'entraînement en rotation principal, et le mécanisme de vis à rouleaux est un mécanisme de vis à rouleaux satellites inverse.
- Chaque rouleau comprend deux tourillons cylindriques s'étendant axialement vers l'extérieur chacun depuis une extrémité axiale du rouleau.
- Les premier et second talons annulaires du guide comprennent une pluralité de zones en creux formées à chaque extrémité axiale des évidements recevant les rouleaux, chaque zone en creux recevant un tourillon des rouleaux.
- Chaque rouleau comprend deux dentures de part et d'autre du filetage extérieur et à chaque extrémité axiale.
- Le mécanisme comprend deux couronnes annulaires fixées dans une partie non filetée de l'alésage de l'écrou et comprenant chacune intérieurement une denture en prise avec la denture correspondante des rouleaux.
- Le moyen d'entraînement secondaire comprend le premier moteur et un train à engrenages couplant en rotation le guide avec l'un parmi la vis et l'écrou couplé au moyen d'entraînement principal.
- Le guide comprend deux portions de guide symétriques et comprenant chacune un manchon couplé au moyen d'entraînement secondaire.
- Le moyen d'entraînement secondaire comprend deux engrenages couplés par un arbre et entraînés en rotation par un moteur, chacun des engrenages étant couplé avec un manchon d'une des portions de guide.

Brève description du dessin

L'invention sera mieux comprise à la lecture de la description qui va suivre donnée uniquement à titre d'exemple non limitatif.

La description est faite en référence aux dessins annexés dans lesquels :

- la Figure 1 est une vue en perspective d'un mécanisme de vis à rouleaux conforme à un mode de réalisation de l'invention ;
- la Figure 2 est une vue en coupe axiale I-I du mécanisme de vis à rouleaux de la Figure 1 ;
- la Figure 3 est une vue en coupe radiale II-II du mécanisme de vis à rouleaux de la Figure 1 ;
- la Figure 4 est une vue en perspective d'un guide du mécanisme de vis à rouleaux de la Figure 1 ;
- la Figure 5 est une vue en coupe axiale de principe d'un mécanisme d'actionnement selon un premier mode de réalisation de l'invention ;
- la Figure 6 est une vue en coupe axiale de principe d'un mécanisme d'actionnement selon un deuxième mode de réalisation de l'invention ;
- la Figure 7 est une vue en coupe axiale de principe d'un mécanisme d'actionnement selon un troisième mode de réalisation de l'invention ; et

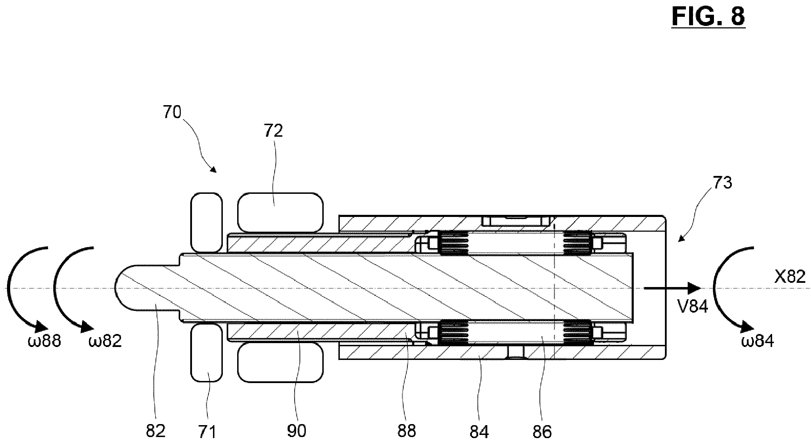

- la Figure 8 est une vue en coupe axiale de principe d'un mécanisme d'actionnement selon un quatrième mode de réalisation de l'invention.

Description détaillée

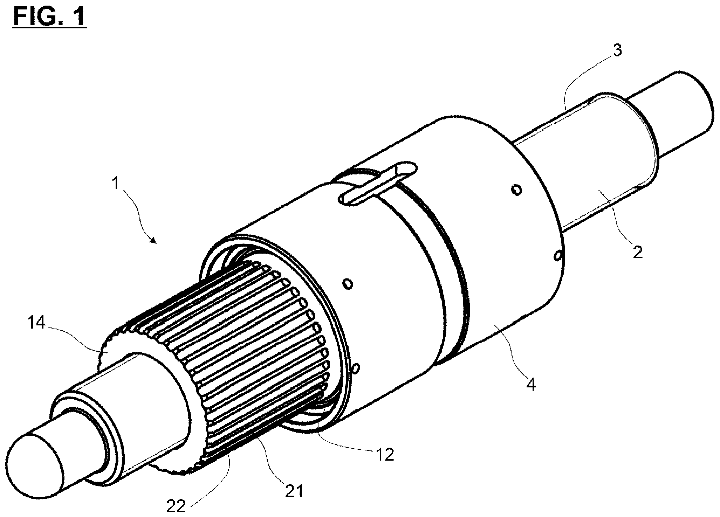

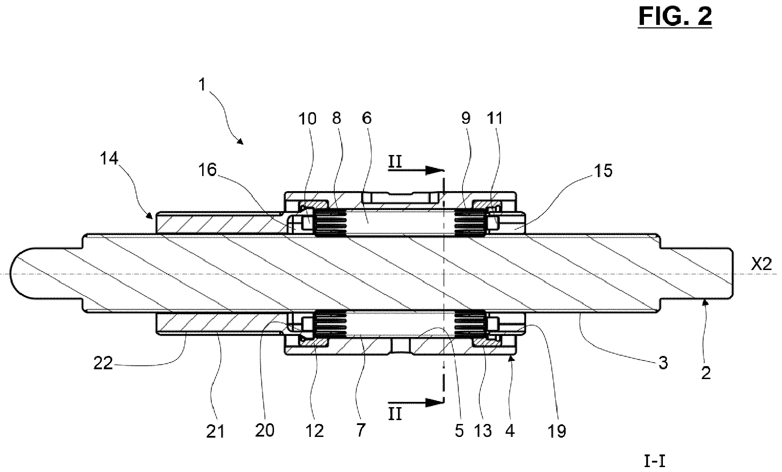

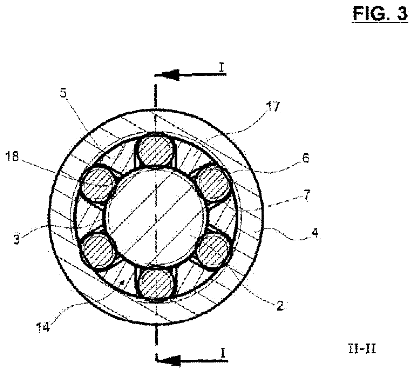

Sur les Figures 1 à 3, un mécanisme de vis à rouleaux, référencé 1 dans son ensemble, comprend une vis 2, d'axe X2, pourvue d'un filetage 3 extérieur, un écrou 4 monté co-axialement autour de la vis 2 et pourvu d'une filetage 5 intérieur dont le diamètre intérieur est supérieur au diamètre extérieur du filetage 3 extérieur, et une pluralité de rouleaux 6 longitudinaux disposés radialement entre la vis 2 et l'écrou 4. La vis 2 s'étend longitudinalement à travers un alésage cylindrique de l'écrou 4 sur lequel est formé le filetage 5 intérieur.

Les rouleaux 6 sont identiques entre eux et répartis de manière régulière autour de la vis 2. Chaque rouleau 6 s'étend selon un axe longitudinal coaxial à l'axe X2 de la vis, et comprend un filetage 7 extérieur en prise avec le filetage 3 extérieur de la vis 2 et le filetage 5 intérieur de l'écrou 4. Le filetage 7 de chaque rouleau 6 est prolongé axialement à chaque extrémité par une denture 8, 9 extérieure qui est elle-même prolongée par un tourillon 10, 11 cylindrique s'étendant vers l'extérieur.

L'écrou 4 comprend en outre deux couronnes 12, 13 annulaires fixées dans une partie non filetée de son alésage, et comprenant chacune intérieurement une denture en prise avec une denture 8, 9 correspondante des rouleaux 6 pour leur synchronisation. Les couronnes 12, 13 et les rouleaux 6 sont entièrement logés dans l'écrou 4, plus précisément ne s'étendent pas au-delà de l'écrou.

Le mécanisme de vis à rouleaux 1 comprend également un guide 14 annulaire de maintien circonférentiel et axial des rouleaux 6 entre la vis 2 et l'écrou 4. Le guide 14 est monté radialement et co-axialement entre la vis 2 et l'écrou 4.

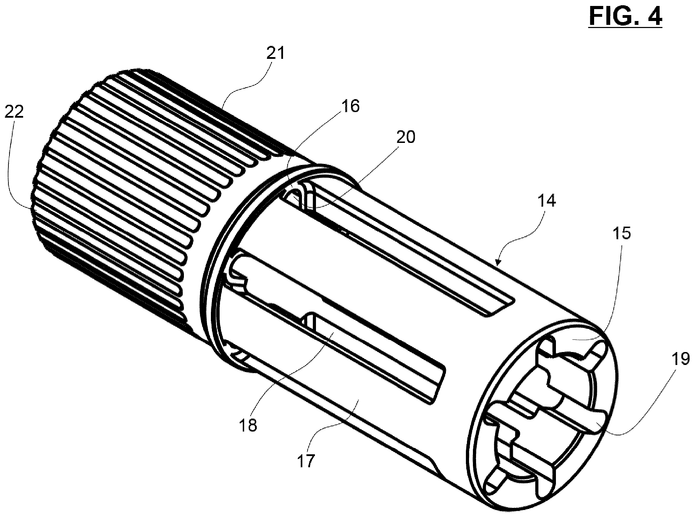

Comme illustré en Figure 4, le guide 14 comprend un premier talon 15 annulaire et un second talon 16 annulaire, lesdits talons étant opposés axialement. Le guide 14 comprend également une pluralité de portions allongées 17 reliant axialement les premier et second talons 15, 16 de manière à définir une pluralité d'évidements 18 séparés les uns des autres dans le sens circonférentiel par lesdites portions allongées 17. Les évidements 18 sont avantageusement répartis de manière régulière dans le sens circonférentiel. Dans le mode de réalisation illustré en Figure 4, le guide 14 est formé d'un seul tenant.

Chacun desdits évidements 18 reçoit un rouleau 6. Les premier et second talons 15, 16 forment des butées axiales pour les rouleaux 6. Le diamètre extérieur des portions allongés 17 est strictement inférieur au diamètre intérieur du filetage 5 intérieur de l'écrou 4 afin de permettre la prise dudit filetage 5 avec les filetages 7 extérieurs des rouleaux 6. Le diamètre extérieur des portions allongés 17 est strictement inférieur au diamètre intérieur des dentures intérieures des couronnes 12, 13 afin de permettre le couplage desdites dentures des couronnes 12, 13 avec les dentures 8, 9 extérieures des rouleaux 6. Le diamètre intérieur des portions allongés 17 est strictement supérieur au diamètre extérieur du filetage 3 extérieur de la vis 2 afin de permettre la prise dudit filetage 3 avec les filetages 7 extérieurs des rouleaux 6.

Les premier et second talons 15, 16 annulaires du guide 14 comprennent une pluralité de zones en creux 19, 20 respectivement, formées à chaque extrémité axiale des évidements 18 recevant les rouleaux 6. Chacune des zones en creux 19, 20 reçoit un tourillon 10, 11 correspondant des rouleaux 6.

Conformément à l'invention, le guide 14 annulaire comprend un manchon 21 cylindrique s'étendant axialement depuis le second talon 16 annulaire vers l'extérieur au-delà de l'écrou 4. La vis 2 s'étend dans un alésage dudit manchon 21. De manière avantageuse, la surface extérieure du manchon 21 cylindrique est pourvue d'une denture 22 extérieure.

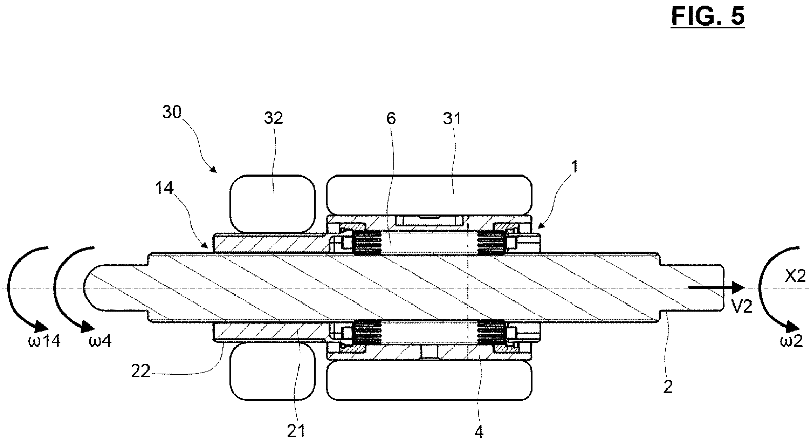

Un tel mécanisme de vis à rouleaux 1 conforme à l'invention peut avantageusement être utilisé dans un mécanisme d'actionnement dont un premier mode de réalisation de l'invention est illustré en Figure 5.

Un mécanisme d'actionnement, référencé 30 dans son ensemble, comprend le mécanisme de vis à rouleaux 1, un moyen d'entraînement en rotation principal 31, et un moyen d'entraînement en rotation secondaire 32.

L'écrou 4 est couplé en rotation au moyen d'entraînement en rotation principal 31. Le moyen d'entraînement en rotation principal 31 comprend avantageusement un moteur tournant couplé par tout moyen adapté à l'écrou 4 afin de lui transmettre un mouvement en rotation ω4 autour de l'axe X2. La vis 2 est donc mobile en déplacement linéaire par rapport à l'écrou 4. Le mécanisme de vis à rouleaux 1 est ainsi un mécanisme de vis à rouleaux satellites.

Le manchon 21 du guide 14 est couplé en rotation au moyen d'entraînement en rotation secondaire 32. Le moyen d'entraînement en rotation secondaire 32 comprend avantageusement un moteur tournant couplé par tout moyen adapté au manchon 21 afin de lui transmettre un mouvement en rotation ω14 autour de l'axe X2. Par exemple, le moyen d'entraînement en rotation secondaire 32 comprend un engrenage (non représenté) couplé en rotation au moteur et en prise avec la denture extérieure 22 dudit manchon 21.

Lorsque l'écrou 4 et le guide 14 sont mis en rotation par les moyens d'entraînement en rotation principal 31 et secondaire 32, respectivement, les rouleaux 6 tournent sur eux-mêmes et tournent autour de la vis 2 sans se déplacer axialement à l'intérieur de l'écrou 4. Les rouleaux 6 sont guidés en rotation parallèlement à l'axe X2 par les dentures des couronnes 12, 13. L'écrou 4 et le guide 14 sont fixes axialement et seule la vis 2 a un mouvement de déplacement linéaire V2 le long de l'axe X2. De surcroit, lorsque le guide 14 et l'écrou 4 sont entraînés à des vitesses de rotation différentes, un mouvement en rotation ω2 de la vis 2 est induit.

Grâce à l'invention, le mouvement de sortie du mécanisme d'actionnement 30 consiste en un mouvement de déplacement linéaire V2 combiné à une mouvement rotation ω2 de la vis 2 tels que :

$$\omega 2 = \omega 14 \times \left(1 + \frac{\text{Diamètre écrou}}{\text{Diamètre vis}}\right) - \omega 4 \times \left(\frac{\text{Diamètre écrou}}{\text{Diamètre vis}}\right)$$

$$V2 = \text{Pas de vis} \times (\omega 4 - \omega 14)$$

où les diamètres de vis 2 et d'écrou 4 sont les diamètres primitifs.

De plus, il est possible d'atteindre des vitesses de déplacement linéaire V2 plus élevées qu'avec un mécanisme de vis à rouleaux entraîné par un simple moyen d'entraînement en rotation. Il est également possible d'assurer une très haute précision de déplacement linéaire et en rotation par contrôle des vitesses de rotation conjuguées ω4 et ω14. De manière particulièrement avantageuse, les moyens d'entraînement peuvent également être équipés de capteurs de position linéaire et/ou angulaire.

Un autre avantage de la présente invention et de permettre de moduler la vitesse V2 de la vis 2 en cours de déplacement linéaire. Par exemple, le mouvement de déplacement linéaire de la vis 2 peut passer d'une vitesse V2 très élevée à une vitesse plus réduite mais de plus haute précision. Ceci permet de diminuer le temps d'actionnement pour mettre en position la vis à vitesse élevée, ne nécessitant pas de contrôle précis, puis ajuster la position finale à vitesse réduite.

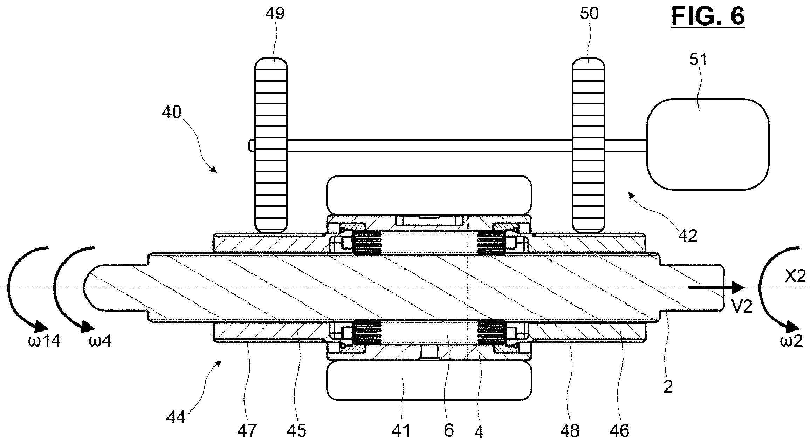

La Figure 6 illustre un second mode de réalisation d'un mécanisme d'actionnement 40 conforme à l'invention.

Le mécanisme d'actionnement comprend un mécanisme de vis à rouleaux 43, un moyen d'entraînement en rotation principal 41, et un moyen d'entraînement en rotation secondaire 42.

Le mécanisme de vis à rouleaux 43 est essentiellement similaire au mécanisme de vis à rouleaux 1 décrit précédemment, et se distingue uniquement par guide 44 pour les rouleaux 6 comprenant deux portions de guide 45, 46.

Les portions de guide 45, 46 sont symétriques, accolées axialement, et comprenant chacune un manchon 47, 48, respectivement, couplé au moyen d'entraînement secondaire 42.

De manière préférentielle, le moyen d'entraînement en rotation secondaire 42 comprend deux engrenages 49, 50 couplé en rotation à un moteur 51 et entre eux, chacun des engrenages 49, 50 étant en prise avec la denture extérieure d'un manchon 47, 49 d'une portion de guide 45, 46 correspondante. Les deux portions de guide 45, 46 sont ainsi couplées en rotation et à une même vitesse ω44 autour de l'axe X2.

Le moyen d'entraînement en rotation principal 41 est essentiellement similaire au moyen 31 décrit précédemment, et le mécanisme d'actionnement 40 a un mode de fonctionnement essentiellement similaire au mécanisme 30 décrit précédemment.

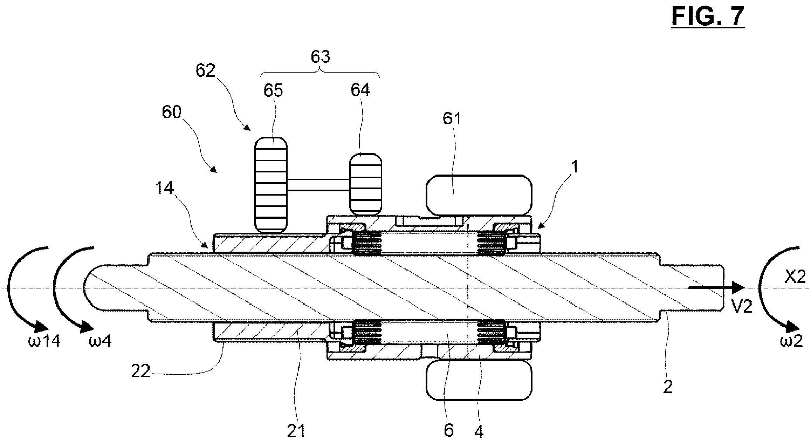

La Figure 7 illustre un troisième mode de réalisation d'un mécanisme d'actionnement 60 conforme à l'invention.

Le mécanisme d'actionnement 60 comprend le mécanisme de vis à rouleaux 1, un moyen d'entraînement en rotation principal 61, et un moyen d'entraînement en rotation secondaire 62.

L'écrou 4 est couplé en rotation au moyen d'entraînement en rotation principal 61. Le moyen d'entraînement en rotation principal 61 comprend avantageusement un moteur tournant couplé par tout moyen adapté à l'écrou 4 afin de lui transmettre un mouvement en rotation ω4. La vis 2 est donc mobile en déplacement linéaire par rapport à l'écrou 4.

Dans ce mode de réalisation présenté à titre d'exemple, le moyen d'entraînement en rotation secondaire 62 comprend un train à engrenages 63 couplant en rotation le guide 14 avec l'écrou 4 lui-même couplé au moyen d'entraînement en rotation principal 61. De manière préférentielle, la surface extérieure de l'écrou 4 comprend une denture extérieure coopérant avec un premier engrenage 64, et la surface extérieure du manchon 21 du guide 14 comprend une denture extérieure coopérant avec un second engrenage 65. Les deux engrenages 64, 65 sont couplés en rotation par un axe. Le guide 14 est ainsi mis en mouvement de rotation ω14 autour de l'axe X2. A titre d'exemple, le train à engrenages 63 peut être de type épicycloïdal.

Une vitesse différentielle entre l'écrou 4 et le guide 14 est alors possible en dimensionnant de manière spécifique les engrenages 64, 65 du train à engrenages 63. Le mécanisme d'actionnement 60 a ainsi un mode de fonctionnement essentiellement similaire au mécanisme 30 décrit précédemment.

Un mécanisme d'actionnement, référencé 70 dans son ensemble, comprend un mécanisme de vis à rouleaux 73, un moyen d'entraînement en rotation principal 71, et un moyen d'entraînement en rotation secondaire 72.

Le mécanisme de vis à rouleaux 73 est de structure essentiellement similaire au mécanisme de vis à rouleaux 1, avec une vis 82, un écrou 84, une pluralité de rouleaux 86 et un guide 88.

La vis 82 est couplée en rotation au moyen d'entraînement en rotation principal 71. Le moyen d'entraînement en rotation principal 71 comprend avantageusement un moteur tournant couplé par tout moyen adapté à la vis 82 afin de lui transmettre un mouvement en rotation ω82 autour d'un axe X82. L'écrou 84 est donc mobile en déplacement linéaire par rapport à la vis 82. Le mécanisme de vis à rouleaux 73 est ainsi un mécanisme de vis à rouleaux satellites inverse.

Le guide 88 comprend un manchon 90 s'étendant axialement au-delà de la course linéaire de l'écrou 84. Le manchon 90 est couplé en rotation au moyen d'entraînement en rotation secondaire 72. Le moyen d'entraînement en rotation secondaire 72 comprend avantageusement un moteur tournant couplé par tout moyen adapté au manchon 90 afin de lui transmettre un mouvement en rotation ω88 autour de l'axe X82.

Lorsque la vis 82 et le guide 88 sont mis en rotation par les moyens d'entraînement en rotation principal 71 et secondaire 72, respectivement, les rouleaux 86 tournent sur eux-mêmes et tournent circonférentiellement dans l'alésage de l'écrou 84 sans se déplacer axialement sur la vis 82. Les rouleaux 86 sont guidés en rotation parallèlement à l'axe X82 par les dentures de couronnes. La vis 82 et le guide 88 sont fixes axialement et seul l'écrou 84 a un mouvement de déplacement linéaire V84 le long de l'axe X82. De surcroit, lorsque le guide 88 et la vis 82 sont entraînés à des vitesses de rotation différentes, un mouvement en rotation ω84 de l'écrou 84 est induit.

En outre, les caractéristiques techniques des différents modes de réalisation peuvent être, en totalité ou seulement pour certaines d'entre elles, combinées entre elles. Ainsi, le mécanisme d'actionnement peut être adapté en termes de coûts, de performance et de simplicité de mise en œuvre.

**Revendications**

1. Mécanisme d'actionnement (30, 40, 60, 70) comprenant un moyen d'entraînement en rotation principal (31, 41, 61, 71) et un mécanisme de vis à rouleaux (1, 43, 73) couplé audit moyen d'entraînement (31, 41, 61, 71), le mécanisme de vis à rouleaux (1, 43, 73) comprenant :

   - une vis (2, 82) comprenant un filetage extérieur (3),
   - un écrou (4, 84) disposé autour et co-axialement à ladite vis (2, 82), l'écrou (4, 84) comprenant un filetage intérieur (5),
   - une pluralité de rouleaux (6, 86) interposés entre la vis (2, 82) et l'écrou (4, 84) et comprenant chacun un filetage extérieur (7) en prise avec les filetages extérieur (3) et intérieur (5) de ladite vis (2, 82) et dudit écrou (4, 84), respectivement, l'un parmi la vis (82) et l'écrou (4) étant couplé au moyen d'entraînement en rotation principal (31, 41, 61, 71), l'autre (2, 84) étant mobile en translation et en rotation par rapport aux rouleaux (6, 86), et
   - un guide (14, 44, 88) annulaire de maintien circonférentiel et axial des rouleaux (6, 86), ledit guide (14, 44, 88) étant monté radialement entre la vis (2, 82) et l'écrou (4, 84), et comprenant un premier talon (15) annulaire, un second talon (16) annulaire, dans lequel le guide annulaire (14, 44, 88) comprend un manchon (21, 45, 46, 90) cylindrique s'étendant axialement depuis un des talons (15, 16) annulaires vers l'extérieur au-delà de l'écrou (4, 84), la vis (2, 82) s'étendant dans un alésage dudit manchon (21, 45, 46, 90), ledit manchon (21, 45, 46, 90) étant couplé à un moyen d'entraînement en rotation secondaire (32, 42, 62, 72), **caractérisé en ce que** le guide annulaire (14, 44, 88) comprend de plus une pluralité de portions allongées (17) reliant axialement les premier et second talons (15, 16) de manière à définir une pluralité d'évidements (18) séparés les uns des autres dans le sens circonférentiel par lesdites portions allongées (17), chacun desdits évidements (18) recevant un rouleau (6, 86), et **en ce que** le moyen d'entraînement en rotation principal (31, 41, 61, 71) comprend un premier moteur, et lequel le moyen d'entraînement en rotation secondaire (32, 42, 72) comprend un second moteur distinct du premier moteur.

2. Mécanisme d'actionnement selon la revendication 1, dans lequel chaque rouleau (6, 86) comprend deux tourillons cylindriques (10, 11) s'étendant axialement vers l'extérieur chacun depuis une extrémité axiale du rouleau (6, 86), les premier et second talons (15, 16) annulaires du guide (14, 44, 88) comprenant une pluralité de zones en creux (19, 20) formées à chaque extrémité axiale des évidements (18) recevant les rouleaux (6, 86), chaque zone en creux (19, 20) recevant un tourillon (10, 11) des rouleaux (6, 86).

3. Mécanisme d'actionnement selon la revendication 1 ou 2, dans lequel chaque rouleau (6) comprend deux dentures (8, 9) de part et d'autre du filetage extérieur (7) et à chaque extrémité axiale, le mécanisme (1, 43) comprenant deux couronnes (12, 13) annulaires fixées dans une partie non filetée de l'alésage de l'écrou (4) et comprenant chacune intérieurement une denture en prise avec la denture (8, 9) correspondante des rouleaux (6).

4. Mécanisme d'actionnement selon l'une quelconque des revendications précédentes, dans lequel le moyen d'entraînement en rotation secondaire (62) comprend le premier moteur et un train à engrenages (63) couplant en rotation le guide (14) avec l'un parmi la vis (2) et l'écrou (4) couplé au moyen d'entraînement en rotation principal (61).

5. Mécanisme d'actionnement selon l'une quelconque des revendications précédentes, dans lequel le guide (44) comprend deux portions de guide (45, 46) symétriques et comprenant chacune un manchon (47, 48) couplé au moyen d'entraînement en rotation secondaire (42).

6. Mécanisme d'actionnement selon la revendication 5, dans lequel le moyen d'entraînement en rotation secondaire (42) comprend deux engrenages (49, 50) couplés par un arbre et entraînés en rotation par un moteur (51), chacun des engrenages (49, 50) étant couplé avec un manchon (47, 48) d'une des portions de guide (45, 46).

7. Mécanisme d'actionnement selon l'une quelconque des revendications précédentes, dans lequel l'écrou (4) est couplé au moyen d'entraînement en rotation principal (31, 41, 61), et le mécanisme de vis à rouleaux (1, 43) est un mécanisme de vis à rouleaux satellites.

8. Mécanisme d'actionnement selon l'une quelconque des revendications 1 à 6, dans lequel la vis (82) est couplée au moyen d'entraînement en rotation principal (71), et le mécanisme de vis à rouleaux (73) est un mécanisme de vis à rouleaux satellites inverse.

**Patentansprüche**

1.  Betätigungsmechanismus (30, 40, 60, 70) umfassend ein Hauptrotationsantriebsmittel (31, 41, 61, 71) und ein an das genannte Antriebsmittel (31, 41, 61, 71) gekoppeltes Rollengewindegetriebe (1, 43, 73), wobei das Rollengewindegetriebe (1, 43, 73) umfasst:

    - eine Gewindespindel (2, 82) mit einem Außengewinde (3),
    - eine Mutter (4, 84), um die und koaxial mit der genannten Gewindespindel (2, 82) angeordnet, wobei die Mutter (4, 84) ein Innengewinde (5) aufweist,
    - mehrere Rollen (6, 86), die zwischen der Gewindespindel (2, 82) und der Mutter (4, 84) angeordnet sind und jeweils ein Außengewinde (7) in Eingriff mit dem Außen- (3) und dem Innengewinde (5) der genannten Gewindespindel (2, 82) bzw. der genannten Mutter (4, 84) umfassen, wobei entweder die Gewindespindel (82) oder die Mutter (4) mit dem Hauptrotationsantriebsmittel (31, 41, 61, 71) gekoppelt ist, während das jeweils andere (2, 84) relativ zu den Rollen (6, 86) in Translation und Rotation beweglich ist, und
    - eine ringförmige Führung (14, 44, 88) zum Halten der Rollen (6, 86) in Umfangs- und Achsenrichtung, wobei die genannte Führung (14, 44, 88) in radialer Richtung zwischen der Gewindespindel (2, 82) und der Mutter (4, 84) angebracht ist und einen ersten ringförmigen Absatz (15), sowie einen zweiten ringförmigen Absatz (16) aufweist,

        in dem die ringförmige Führung (14, 44, 88) eine zylindrische Hülse (21, 45, 46, 90) umfasst, die sich in Achsenrichtung von einem der ringförmigen Absätze (15, 16) über die Mutter (4, 84) hinaus auswärts erstreckt, während die Gewindespindel (2, 82) in einer Bohrung der genannten Hülse (21, 45, 46, 90) verläuft, wobei die genannte Hülse (21, 45, 46, 90) an ein Nebenrotationsantriebsmittel (32, 42, 62, 72) gekoppelt ist,
        **dadurch gekennzeichnet, dass** die ringförmige Führung (14, 44, 88) außerdem mehrere längliche Bereiche (17) aufweist, die in Achsenrichtung den ersten und den zweiten Absatz (15, 16) derart miteinander verbinden, dass mehrere in Umfangsrichtung durch die genannten länglichen Bereiche (17) voneinander getrennte Ausnehmungen (18) definiert werden, wobei jede der genannten Ausnehmungen (18) eine Rolle (6, 86) aufnimmt, und dadurch, dass das Hauptrotationsantriebsmittel (31, 41, 61, 71) einen ersten Motor umfasst und das Nebenrotationsantriebsmittel (32, 42, 72) einen vom ersten Motor verschiedenen zweiten Motor umfasst.

2.  Betätigungsmechanismus nach Patentanspruch 1, in dem jede Rolle (6, 86) zwei zylindrische Zapfen (10, 11) aufweist, die sich in Achsenrichtung, jeweils von einem axialen Ende der Rolle (6, 86) aus, auswärts erstrecken, wobei der erste und der zweite ringförmige Absatz (15, 16) der Führung (14, 44, 88) mehrere vertiefte Bereiche (19, 20) aufweist, die an jedem axialen Ende der Ausnehmungen (18), die die Rollen (6, 86) aufnehmen, ausgebildet sind, wobei jeder vertiefte Bereich (19, 20) einen Zapfen (10, 11) der Rollen (6, 86) aufnimmt.

3.  Betätigungsmechanismus nach Patentanspruch 1 oder 2, in dem jede Rolle (6) zwei Verzahnungen (8, 9) beiderseits des Außengewindes (7) und an jedem axialen Ende aufweist und der Mechanismus (1, 43) zwei ringförmige Kränze (12, 13) umfasst, die in einem nichtgewindeten Teil der Bohrung der Mutter (4) befestigt sind und jeweils eine Innenverzahnung in Eingriff mit der entsprechenden Verzahnung (8, 9) der Rollen (6) aufweist.

4.  Betätigungsmechanismus nach irgendeinem der vorangehenden Patentansprüche, in dem das Nebenrotationsantriebsmittel (62) den ersten Motor und ein Getriebe (63) umfasst, das die Führung (14) zur Rotation an entweder die Gewindespindel (2) oder die Mutter (4) koppelt, die an das Hauptrotationsantriebsmittel (61) gekoppelt ist.

5.  Betätigungsmechanismus nach irgendeinem der vorangehenden Patentansprüche, in dem die Führung (44) zwei symmetrische Führungsabschnitte (45, 46) umfasst, die jeweils eine Hülse (47, 48) umfassen, die an das Nebenrotationsantriebsmittel (42) gekoppelt ist.

6.  Betätigungsmechanismus nach Patentanspruch 5, in dem das Nebenrotationsantriebsmittel (42) zwei durch eine Welle gekoppelte Getriebe (49, 50) umfasst, die durch einen Motor (51) zur Rotation angetrieben werden, wobei jedes der Getriebe (49, 50) an eine Hülse (47, 48) eines der Führungsabschnitte (45, 46) gekoppelt ist.

7.  Betätigungsmechanismus nach irgendeinem der vorangehenden Patentansprüche, in dem die Mutter (4) an das Hauptrotationsantriebsmittel (31, 41, 61) gekoppelt ist und das Rollengewindegetriebe (1, 43) ein Planetenrollengewindegetriebe ist.

8.  Betätigungsmechanismus nach irgendeinem der Patentansprüche 1 bis 6, in dem die Gewindespindel (82) an das Hauptrotationsantriebsmittel (71) gekoppelt ist und das Rollengewindegetriebe (73) ein Außenplanetenrollengewindegetriebe ist.

**Claims**

1.  Actuation mechanism (30, 40, 60, 70) comprising a main rotational driving means (31, 41, 61, 71) and a roller screw mechanism (1, 43, 73) coupled to said driving means (31, 41, 61, 71), the roller screw mechanism (1, 43, 73) comprising:

    - a screw (2, 82) comprising an external thread (3),
    - a nut (4, 84) arranged around and coaxially with said screw (2, 82), the nut (4, 84) comprising an internal thread (5),
    - a plurality of rollers (6, 86) that are interposed between the screw (2, 82) and the nut (4, 84) and each comprise an external thread (7) in engagement with the external thread (3) and internal thread (5) respectively of said screw (2, 82) and of said nut (4, 84) , one among the screw (82) and the nut (4) being coupled to the main rotational driving means (31, 41, 61, 71), the other (2, 84) being able to move in translation and in rotation with respect to the rollers (6, 86), and
    - an annular guide (14, 44, 88) for circumferentially and axially holding the rollers (6, 86), said guide (14, 44, 88) being mounted radially between the screw (2, 82) and the nut (4, 84), and comprising a first annular lug (15) and a second annular lug (16),

       wherein the annular guide (14, 44, 88) comprises a cylindrical sleeve (21, 45, 46, 90) extending axially from one of the annular lugs (15, 16) out beyond the nut (4, 84), the screw (2, 82) extending in a bore of said sleeve (21, 45, 46, 90), said sleeve (21, 45, 46, 90) being coupled to a secondary rotational driving means (32, 42, 62, 72),
       **characterized in that** the annular guide (14, 44, 88) further comprises a plurality of elongate portions (17) that axially connect the first and second lugs (15, 16) so as to define a plurality of recesses (18) that are separated from one another in the circumferential direction by said elongate portions (17), each one of said recesses (18) receiving a roller (6, 86), and **in that** the main rotational driving means (31, 41, 61, 71) comprises a first motor, and wherein the secondary rotational driving means (32, 42, 72) comprises a second motor that is distinct from the first motor.

2.  Actuation mechanism according to claim 1, wherein each roller (6, 86) comprises two cylindrical canyons (10, 11) extending axially outwards, each from one axial end of the roller (6, 86), the first and second annular lugs (15, 16) of the guide (14, 44, 88) comprising a plurality of hollow regions (19, 20) formed at each axial end of the recesses (18) receiving the rollers (6, 86), each hollow region (19, 20) receiving a trunnion (10, 11) of the rollers (6, 86).

3.  Actuation mechanism according to claim 1 or 2, wherein each roller (6) comprises two teeth (8, 9) on either side of the external thread (7) and at each axial end, the mechanism (1, 43) comprising two ring gears (12, 13) secured in a non-threaded portion of the bore of the nut (4), and each comprising internally a toothing in engagement with the corresponding toothing (8, 9) of the rollers (6).

4.  Actuation mechanism according to any one of the preceding claims, wherein the secondary rotational driving means (62) comprises the first motor and a gear train (63) providing rotational coupling between the guide (14) and one among the screw (2) and the nut (4), the driving means (62) being coupled to the main rotational driving means (61).

5.  Actuation mechanism according to any one of the preceding claims, wherein the guide (44) comprises two symmetric guide portions (45, 46), each comprising a sleeve (47, 48) coupled to the secondary rotational driving means (42).

6.  Actuation mechanism according to claim 5, wherein the secondary rotational driving means (42) comprises two gears (49, 50) that are coupled by a shaft and are driven in rotation by a motor (51), each one of the gears (49, 50) being coupled to a sleeve (47, 48) of one of the guide portions (45, 46).

7. Actuation mechanism according to any one of the preceding claims, wherein the nut (4) is coupled to the main rotational driving means (31, 41, 61), and the roller screw mechanism (1, 43) is a satellite roller screw mechanism.

8. Actuation mechanism according to any one of claims 1 to 6, wherein the screw (82) is coupled to the main rotational driving means (71), and the roller screw mechanism (73) is an inverted satellite roller screw mechanism.

EP 3 663 612 B1

**FIG. 1**

**FIG. 2**

I-I

**FIG. 3**

II-II

EP 3 663 612 B1

**FIG. 4**

21

22

16

20

14

15

19

18

17

FIG. 5

FIG. 6

EP 3 663 612 B1

FIG. 7

**FIG. 8**

**RÉFÉRENCES CITÉES DANS LA DESCRIPTION**

**Documents brevets cités dans la description**

- US 3214991 A